# DEMANDE DE BREVET EUROPEEN

(11) **EP 3 651 246 A1**
(43) Date de publication de la demande: **13.05.2020**
(21) Numéro de dépôt: 19207900.2
(22) Date de dépôt: 08.11.2019
(51) Int. Cl.: H01M 4/60, H01M 4/62, H01M 10/052

(54) **UTILISATION D'UNE BATTERIE À MATÉRIAU ACTIF POLYVIOLOGÈNE**

(30) Priorité: 09.11.2018 FR 1860398
(71) Demandeur: Commissariat à l'Energie Atomique et aux Energies Alternatives, 75015 Paris (FR); Université de Nantes, 44035 Nantes Cedex 1 (FR); Centre National de la Recherche Scientifique, 75016 Paris (FR)
(72) Inventeur: GUTEL, Thibaut, 38054 GRENOBLE CEDEX 09 (FR); DUBOIS, Lionel, 38054 GRENOBLE CEDEX 09 (FR); CADIOU, Vincent, 35400 SAINT-MALO (FR); POIZOT, Philippe, 44119 TREILLIERES (FR)
(74) Mandataire: Nony

(57) **Abrégé**

La présente invention concerne un procédé d'utilisation d'une batterie disposant d'une électrode fonctionnant selon un mécanisme de complexation d'anions et au sein de laquelle le matériau actif d'électrode est un polyviologène caractérisé en ce que ledit polyviologène est un matériau insoluble dans l'électrolyte de ladite batterie et en ce que les conditions électrochimiques d'usage de ladite batterie sont ajustées pour que son processus de cycle de charge/décharge, soit établi sur la réaction redox à 1 électron entre la forme oxydée à 1 électron des motifs viologènes dudit polyviologène, dites radical cation, et leur forme totalement réduite, dites, forme neutre de polyviologène.

## Description

La présente invention se rapporte au domaine des batteries tout particulièrement utiles pour le stockage électrochimique d'énergie.

A ce jour, la recherche dans le domaine de l'énergie est orientée vers l'exploitation de sources d'énergie plus « vertes » et plus durables car renouvelables, comme les énergies solaire et géothermique ainsi que l'hydroélectricité et l'énergie éolienne.

Toutefois, l'exploitation de ces sources d'énergie, pose de manière exacerbée le problème du stockage de l'énergie. Or, les batteries usuelles ne s'avèrent pas totalement satisfaisantes à cet égard. Il a ainsi été développé les batteries à matériaux d'électrodes organiques. A titre représentatif des matériaux constitutifs de ces électrodes organiques peuvent notamment être cités les quinones et les dérivés de bipyridine N,N-disubstitués dit encore les viologènes. L'énergie électrique est générée par la délocalisation des électrons pi de ces matériaux organiques.

Parmi ces matériaux, les polyviologènes s'avèrent tout particulièrement intéressants.

Ainsi, Yao et al. (Scientific Reports, 5,10962, 2015 ; DOI : 10.1038/srep10962) décrivent l'utilisation de polyviologènes linéaires comme matériau actif d'électrode négative de batterie dite « à ions moléculaires». Cette électrode à base de polyviologène, associée à une électrode positive à base de polyvinylcarbazole, est ensuite utilisée pour assembler une batterie « anionique », c'est-à-dire dans laquelle c'est l'anion PF₆⁻ qui fait la navette entre les deux électrodes lors de la charge/décharge. La batterie ionique est utilisée à des cycles de -0,7 et -1,2V vs Ag⁺/Ag selon la réaction redox à 2 électrons qui suit :

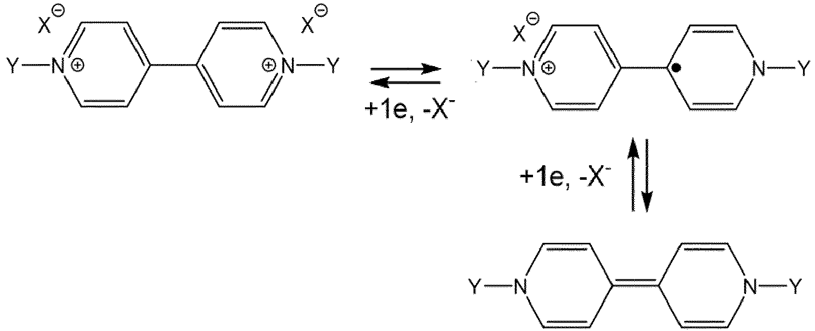

Malheureusement, il est constaté une chute rapide des performances au cours d'un tel cyclage.

Sano et al. (ACS Appl. Interfaces, 2013, 5, 1355-1361) décrivent également l'utilisation de films de polyviologènes réticulés comme matériau actif d'électrode négative de batteries anioniques associées à une électrode positive à base de polynitroxyde. L'étude électrochimique des composés obtenus repose également sur une réaction redox à 2 électrons à -0,48 V et -0,86 V vs Ag⁺/Ag avec une capacité initiale de 174 mAh/g (soit 95% de la capacité théorique).

Ces dérivés viologène ont en outre été considérés comme composés électroactifs d'anolyte (électrolyte négatif) de batterie à flux (redox flow) mais dans des versions solubles. [Hagemann, J. Power Sources, 2018, 378, 546-554 ; DeBruler, Chem, 2017, 3, 961-978 ; Beh, ACS Energy Lett., 2017 ; 639-644 ; Hu, J. Am. Chem. Soc., 2017, 139, 1207-1214]

Néanmoins, l'utilisation de polyviologènes en tant que matériaux d'électrodes de batteries se heurte à des problèmes de perte de performances rapide et donc des durées de vie très faibles qui sont attribuées à une dissolution du matériau actif dans l'électrolyte au cours du cyclage. Il en découle une instabilité du comportement de charge/décharge.

Or, un utilisateur d'un dispositif alimenté électriquement par une batterie rechargeable s'attend à ce que la capacité réversible de la batterie ne diminue pas, ou peu, lors de l'augmentation du nombre de cycles de charge/décharge.

Il existe donc un besoin d'une batterie rechargeable utilisant un matériau actif de type polyviologène dont les performances sont stabilisées au cours de son processus de cycle.

L'invention vise précisément à satisfaire ce besoin.

Contre toute attente, les inventeurs ont constaté qu'il est possible de garantir les performances d'une batterie à matériau actif de type polyviologène sous réserve de considérer des conditions électrochimiques spécifiques pour son utilisation.

Plus précisément, la présente invention vise à titre principal un procédé d'utilisation d'une batterie, disposant d'une électrode fonctionnant selon un mécanisme de complexation d'anions et au sein de laquelle le matériau actif d'électrode est un polyviologène caractérisé en ce que ledit polyviologène est un matériau insoluble dans l'électrolyte de ladite batterie et en ce que les conditions électrochimiques d'usage de ladite batterie sont ajustées pour que son processus de cycle de charge/décharge, soit établi sur la réaction redox à 1 électron entre la forme oxydée à 1 électron des motifs viologènes dudit polyviologène, dites radical cation, et leur forme totalement réduite, dites forme neutre de polyviologène.

Le processus de cycle charge/décharge est initié avec un polyviologène sous forme neutre ou sous forme radical cation.

Selon l'invention, les conditions électrochimiques d'usage de ladite batterie sont ajustées pour que la forme oxydée à deux électrons des motifs viologènes du matériau polyviologène ne participe pas à un cycle charge/décharge. En d'autres termes, la forme oxydée à deux électrons des motifs viologènes si réduite n'est pas régénérée.

En particulier, les formes oxydées dudit polyviologène sont associées à au moins un contre ion de type anion organique choisi parmi [N(SO₂CF₃)₂]⁻ (=TFSI⁻), [N(SO₂F)₂]⁻ (=FSI⁻), 4,5-dicyano-2-(trifluoromethyl)imidazole (=TDI), RCOO⁻, HCOO⁻, ou inorganique comme PF₆⁻, BF₄⁻, ClO₄⁻, F⁻, Cl⁻, Br⁻, I⁻, NO₃⁻ et HSO₄⁻.

Les conditions d'usage électrochimique proposées selon l'invention s'avèrent tout particulièrement efficaces.

Tout d'abord, elles permettent de limiter efficacement la dégradation électrochimique du matériau polyviologène. Ainsi, par opposition à la réaction de réduction/oxydation bi-électronique qui conduit à des pertes de performances rapides en cyclage, la sélection d'un domaine de potentiel ciblant un cyclage sur la réaction à un seul électron entre le polyviologène totalement réduit et sa forme dont les monomères sont mono-oxydés permet de s'affranchir de ce phénomène indésirable.

En conséquence, la batterie possède un comportement de charge/décharge stabilisé. Au sens de l'invention, un comportement de charge/décharge stabilisé entend qualifier le fait que la capacité réversible de la batterie ne décroit quasiment pas lors de l'augmentation du nombre de cycles charge/décharge. Cet avantage est notamment illustré dans les exemples ci-après.

### FIGURES

La figure la illustre le cycle voltamétrique observé pour le dispositif décrit en exemple 4 dans une plage de potentiel de 3,00 V à 1,50 V.
La figure 1b illustre le cycle voltamétrique observé pour le dispositif décrit en exemple 4 dans une plage de potentiel de 2,25 V à 1,50 V.
La figure 2a illustre l'évolution de la capacité en fonction du nombre de cycles pour le dispositif décrit en exemple 4 utilisé dans une plage de potentiel de 3,00 V à 1,50 V.
La figure 2b illustre l'évolution de la capacité en fonction du nombre de cycles pour le dispositif décrit en exemple 4 utilisé dans une plage de potentiel de 2,25 V à 1,50 V.
La figure 3 illustre le profil potentiel-capacité du second cycle pour des électrodes comprenant différents composés en fonction du contre ion choisi comme précisé en exemple 5.
La figure 4 illustre les profils potentiel-capacité du premier et dixième cycle pour la batterie obtenue en exemple 6.

Les expressions « *compris entre* ... *et* ... » et « *variant de* ... *à* ... » doivent se comprendre bornes incluses, sauf si le contraire est spécifié.

### DESCRIPTION DETAILLEE DE L'INVENTION

Comme évoqué ci-dessus, les polyviologènes sont des matériaux déjà utilisés en tant que matériaux actifs d'électrode anodiques.

Au sens de l'invention, à défaut de précision, le terme polyviologène couvre l'ensemble des formes oxydées et réduite de polyviologène.

Au sens de l'invention, le terme matériau actif entend désigner le matériau électroactif au niveau de l'électrode.

Les polyviologènes convenant à l'invention en tant que matériau actif d'électrode, sont formés de monomères comprenant au moins un motif viologène neutre de formule générale (Ia) ou un motif viologène oxydé de formule générale (Ib) ou (Ic)

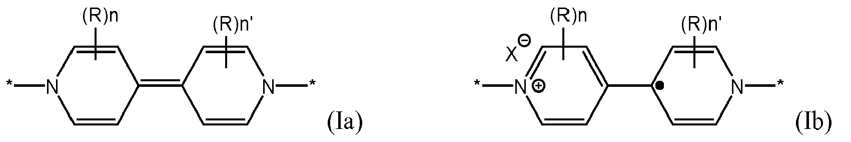

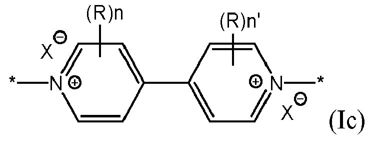

Dans lesquelles :
- Les groupes R, identiques ou différents, représentent un atome d'hydrogène, un alkyle linéaire en C₂ à C₅₀ le cas échéant substitué par au moins une fonction carboxylique, carboxylate, sulfonique, sulfonate, phosphonique, phosphonate, amine, au moins un atome d'halogène, au moins un groupement hydroxy ou aldéhyde voire interrompu par un motif cétonique.
- n et n'sont indépendamment l'un de l'autre égaux à 0 ou à un entier entre 1 et 50 et

Les radicaux X, identiques ou différents et de préférence identiques sont respectivement un anion organique choisi parmi [N(SO₂CF₃)₂]⁻ (=TFSI⁻), [N(SO₂F)₂]⁻ (=FSI⁻), 4,5-dicyano-2-(trifluoromethyl)imidazole (=TDI), RCOO⁻, HCOO⁻, ou inorganique comme PF₆⁻, BF₄⁻, ClO₄⁻, F⁻, Cl⁻, Br⁻, I⁻, NO₃⁻ et HSO₄⁻.

Comme signifié précédemment, le matériau actif polyviologène est insoluble dans l'électrolyte qui lui est associé dans la batterie le contenant.

Au sens de l'invention, le terme insoluble entend qualifier le fait qu'il n'est pas constaté une dissolution de ce polyviologène dans l'électrolyte au cours du processus de cyclage.

La nature chimique des contre-ions associés aux formes oxydées de polyviologène et notamment figurés par les symboles X dans les formules Ib, Ic et celles détaillées ci-après, est précisément avantageuse pour conditionner l'insolubilité du matériau polyviologène dans l'électrolyte conjointement considéré pour la batterie.

De préférence, les monomères constitutifs dudit polyviologène sont identiques. En d'autres termes, ils possèdent des motifs viologènes de même nature chimique et même degré d'oxydation.

Le matériau polyviologène peut être ainsi un polyviologène linéaire, un polyviologène réticulé ou un de leurs mélanges.

En particulier, le matériau d'électrode de ladite batterie est à l'initiation du processus de cycle charge/décharge, c'est-à-dire un polyviologène dont les motifs viologènes sont non chargés, comme notamment illustré en figure (Ia) ou un polyvilogène sous forme radical cation, c'est-à-dire soit un polyviologène dont les motifs viologènes sont sous une forme monooxydée comme notamment illustré en figure (Ib).

Selon une variante de réalisation, la forme neutre ou la forme radical cation du polyviologène est générée au préalable in situ, c'est-à-dire au sein de la batterie, à partir d'un matériau actif d'électrode polyviologène dont les motifs viologènes sont sous leur forme oxydée à deux électrons comme notamment illustré en figure (Ic), par réduction totale ou partielle desdits motifs viologènes.

Selon cette variante, la batterie dédiée à être utilisée selon l'invention, contient donc à l'origine, à titre de matériau actif d'électrode, un matériau polyviologène sous forme oxydée à deux électrons. Cette forme peut être réduite in situ en imposant un courant négatif jusqu'à atteindre la tension de 1,5 V nécessaire à la réduction complète dudit polyviologène. Cette variante est notamment illustrée en exemples 4 et 5.

Selon une autre variante de réalisation, la batterie dédiée à être utilisée selon l'invention, contient à titre de matériau actif d'électrode un matériau polyviologène sous forme radical cation. Plus précisément, ces motifs viologènes sont de formule (Ib). Un tel matériau a généralement été généré au préalable dans un dispositif électrochimique distinct de ladite batterie. Cette variante est notamment illustrée en exemple 6.

Comme détaillé ci-dessus le cycle de charge/décharge conforme à l'invention intervient entre la forme neutre (Ia) et la forme radical cation (Ib).

La forme (Ic) si présente avant le cycle conforme à l'invention, est essentiellement soumise à une réduction non réversible pour générer la forme neutre (Ia) ou (Ib). Les conditions électrochimiques d'usage de ladite batterie sont ajustées pour que la forme oxydée à deux électrons des motifs viologènes du matériau polyviologène ne participe pas à un cycle charge/décharge. Elle n'est pas régénérée.

Un polyviologène selon l'invention peut posséder une masse molaire de 500 à 1 million g/mole.

En particulier, la batterie comprend, à titre de matériau actif d'électrode, un matériau polyviologène de formule (II) 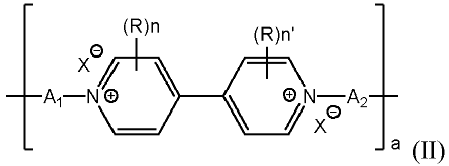 sous ses formes oxydées, en particulier radical cation ou réduite et dans laquelle
- les motifs A₁ et A₂ identiques ou différents, indépendamment l'un de l'autre figurent une liaison covalente ou représentent une chaîne alkyle en C₁ à C₅₀ le cas échéant substituée par au moins une fonction carboxylique, carboxylate, sulfonique, sulfonate, phosphonique, phosphonate, amine, au moins un atome d'halogène, au moins un groupement hydroxy ou aldéhyde voire interrompue par un radical cétonique ou un motif de formule

   -Ar(A₃)-

   avec Ar étant un motif arylène en C₆ à C₁₀ trivalent ou tétravalent, de préférence un phénylène C₆H₃ et A₃ une chaîne alkyle en C₁ à C₂₀ liée covalemment au motif Ar et à un dérivé viologène de formule (II) et
- R, n, n' et X sont tels que définis en formule (Ib) ou (Ic) et a est un entier variant de 1 à 10 millions.

Selon un premier mode de réalisation, la batterie comprend, à titre de matériau actif d'électrode, un matériau polyviologène linéaire et en particulier de formule générale (III) 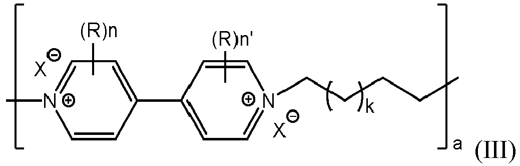 sous ses formes oxydées ou réduite et dans laquelle R, n, n' et X⁻ si présent, ont les mêmes significations que précédemment, a est un entier variant de 1 à 10 millions et k est un entier variant de 1 à 50.

Selon un second mode de réalisation, la batterie comprend, à titre de matériau actif d'électrode, un matériau polyviologène réticulé et en particulier de formule générale (IV) : 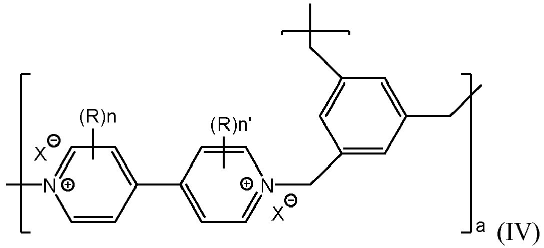 sous ses formes oxydées ou réduite et dans laquelle R, n, n', a et X⁻ si présent, ont les mêmes significations que précédemment.

Conviennent notamment à l'invention les polyviologènes de formules II à IV dans lesquelles R=H ; n=n'=1 ; et a est un entier supérieur à 5 et inférieur à 100.

A titre représentatif de polyviologènes convenant à l'invention à titre de matériau actif d'électrode, peuvent notamment être cités le poly(1,1'-butyl-4,4'-bipyridinium dihexafluorophosphate) (souvent abrégé PBPy) et le poly(1,1,1-triméthylbenzyl-4,4'-bipyridinium dihexafluorophosphate)

Les polyviologènes convenant à l'invention à titre de matériau actif d'électrode, peuvent être préparés par voie électrochimique comme décrit dans l'article Sano et al. (ACS Appl. Interfaces, 2013, 5, 1355-1361) ou par voie chimique comme décrit dans l'article Yao et al. (Scientific Reports, 5,10962, 2015 ; DOI: 10.1038/srep10962).

Dans le cadre de la présente invention, le choix de la polymérisation chimique est privilégié car elle permet de préparer aisément le matériau en grande quantité (échelle du gramme au kg) et d'envisager la formulation à grande échelle d'électrodes non seulement composites (composées de matière active, conducteur électronique, liant) mais également de fortes épaisseurs (>10µm) présentant ainsi des capacités surfaciques importantes (de l'ordre du mAh/cm²).

Quelle que soit la voie de synthèse considérée, un polyviologène linéaire ou réticulé, est préparé par quaternarisation de la bipyridine par un halogénoalcane di-, tri- ou tétra-fonctionnel (voir plus dans le cas de chaines alcanes branchés) puis métathèse d'anions. Ce type de réaction est notamment détaillé dans la publication Yao et al. (Scientific Reports, 5,10962, 2015 ; DOI: 10.1038/srep10962).

Un matériau polyviologène est apte à manifester la réaction redox à 2 électrons qui suit :

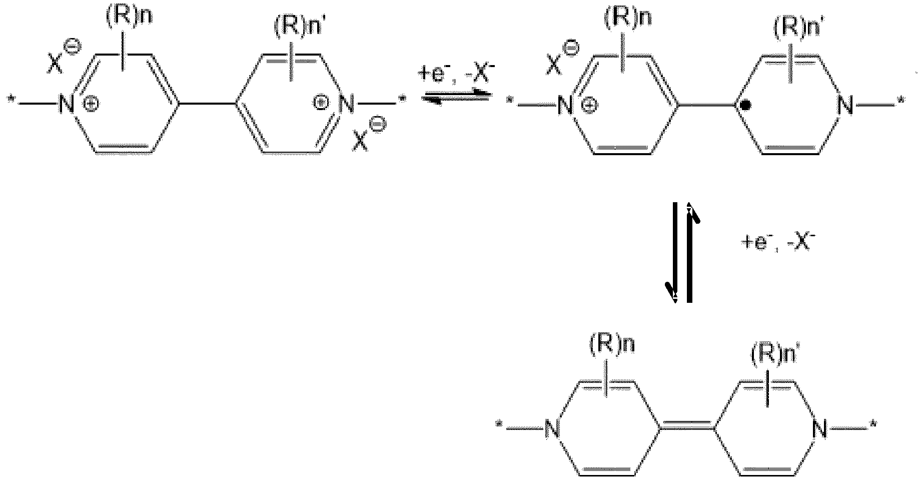

Comme énoncé précédemment, dans les batteries de l'art antérieur, le cycle charge/décharge repose uniquement sur cette réaction redox à 2 électrons qui malheureusement ne peut être stabilisé en termes de performances. Ceci est notamment illustré en figures la et 2a. Il est observé une capacité réversible qui décroit avec une augmentation du nombre de cycles charge/décharge. Le procédé selon la présente invention a précisément pour avantage de s'affranchir de ce défaut de stabilisation.

Dans le procédé de l'invention, seul le second processus électrochimique, à savoir celui impliquant la conversion électrochimique des monomères viologènes mono-oxydés en monomères viologènes totalement réduits/neutres et inversement, est considéré.

Le processus électrochimique impliquant la conversion électrochimique de la forme monomérique di-oxydée si présente, en sa forme monomérique réduite ne participe pas au processus de cycle selon l'invention qui est limité entre la forme réduite de polyviologène et sa forme mono-oxydée.

Dans différents modes de réalisation de l'invention, les matériaux décrits ci-dessus peuvent être utilisés dans des batteries dites lithium, sodium, potassium, magnésium, calcium, des batteries sodium-soufre (dites « NaS ») ou encore des batteries en configuration dual-ion ou anion-ion.

Dans un mode de réalisation de l'invention, une batterie peut être obtenue en associant à une électrode à matériau polyviologène telle que décrite ci-dessus une contre électrode métallique.

Par exemple une telle électrode métallique peut être une électrode au lithium, au sodium, au potassium, au magnésium ou au calcium.

Comme électrodes positives de batteries au lithium peuvent notamment être citées les électrodes au phosphate comme LiFePO₄, LiMnPO₄, LiCoPO₄, des électrodes dites de types « NMC » ou « NCA » notamment sous formes d'oxydes lamellaires répondant à la formule générale LiNiₓMn_{y}Co_{z}AlₐO₂ avec x+y+z=1, des électrodes d'oxydes spinelles comme LiMn₂O₄, LiMn_{1,5}Ni_{0,5}O₄.

Comme électrodes positives de batteries au sodium peuvent notamment être citées les électrodes dites de types « NVPF » de formule Na₃V₂(PO₄)₂F₃, ou encore des électrodes dites de types « NMC » notamment sous formes d'oxydes lamellaires répondant à la formule générale NaNiₓMn_{y}Co_{z}O₂ avec x+y+z=1.

Comme électrodes positives de batteries anion-ion organique peuvent notamment être citées les électrodes composées de radicaux nitroxydes, de thioéthers, ou d'amines aromatiques ou des polymères conducteurs se dopant selon un mécanisme de type « p ».

En ce qui concerne les électrolytes peuvent notamment être cités les solutions aqueuses ou les mélanges de solvants de type carbonate d'alkyles, éthers, esters, nitriles, etc... comprenant un sel de lithium, de sodium, de potassium, de calcium, de magnésium mais également d'ammoniums, de phosphonium, de sulfonium associé à des anions organiques choisi parmi, [N(SO₂CF₃)₂]⁻ (=TFSI⁻), [N(SO₂F)₂]⁻ (=FSI⁻), 4,5-dicyano-2-(trifluoromethyl)imidazole (=TDI), RCOO⁻, HCOO⁻ ou inorganiques choisis parmi PF₆⁻, BF₄⁻, ClO₄⁻, Cl⁻, F⁻, Br⁻, I⁻, NO₃⁻.

Selon un mode de réalisation, ladite batterie comprend à titre de contre-électrode, une électrode de lithium métallique et ses conditions électrochimiques d'usage pour son processus de cycle charge/décharge sont obtenues pour un balayage de potentiel borné entre 1,5 V et 2,25 V vs Li⁺/Li. Autrement dit, les conditions électrochimiques d'usage d'une telle batterie, selon l'invention, sont obtenues pour une tension comprise entre 1,5 V et 2,25 V.

Selon un autre mode de réalisation, ladite batterie comprend à titre de contre-électrode, le 2,5-dianilinotéréphtalate de dilithium et ses conditions électrochimiques d'usage pour son processus de cycle charge/décharge sont obtenues pour un balayage de tension borné entre 0,2 V et 1,2 V. Autrement dit, les conditions électrochimiques d'usage d'une telle batterie, selon l'invention, sont obtenues pour une tension comprise entre 0,2 V et 1,2 V.

Les exemples et les figures, détaillés ci-après, sont présentés à des fins illustratives et non limitatives du domaine de l'invention.

### EXEMPLE 1

### Synthèse et caractérisation d'un polyviologène linéaire selon le schéma de synthèse suivant

### a) Quaternisation de la 4,4'-bipyridine

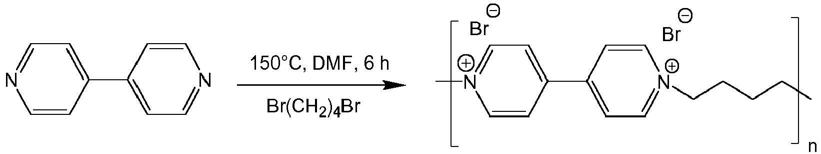

1 g de 4,4'-bipyridine est dissout dans 6 ml de diméthylformamide anhydre auxquel est ajouté 0,76 ml de dibromobutane. La solution est mise au reflux pendant 6 heures à 150°C de manière à former une suspension jaune. Le solide est filtré puis lavé avec 3 fois avec 50 ml d'acétate d'éthyle avant d'être séché à 80°C. Le rendement de cette réaction est de 96 % soit 2,28 g de polymère obtenu.

### b) Réaction d'échange d'ions sur le polyviologène bromé :

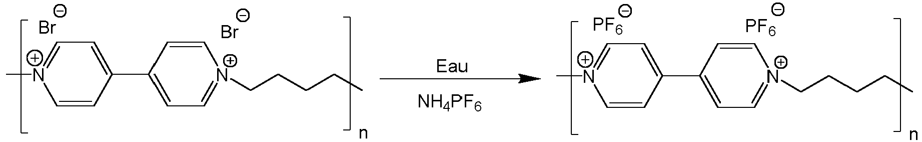

Dans une seconde étape, 1 g de ce produit est dissout dans 10mL d'eau distillée auquel est ajoutée une solution de 5 g de NH₄PF₆ dans 7,5 mL d'eau au goutte à goutte. Après 1h de mélange, le précipité obtenu est filtré et lavé au diéthyl éther avant d'être séché à 80°C. 0,315 g de poudre violette est obtenu soit un rendement de 82 %.

### EXEMPLE 2

### Synthèse et caractérisation d'un polyviologène réticulé selon le schéma de synthèse suivant :

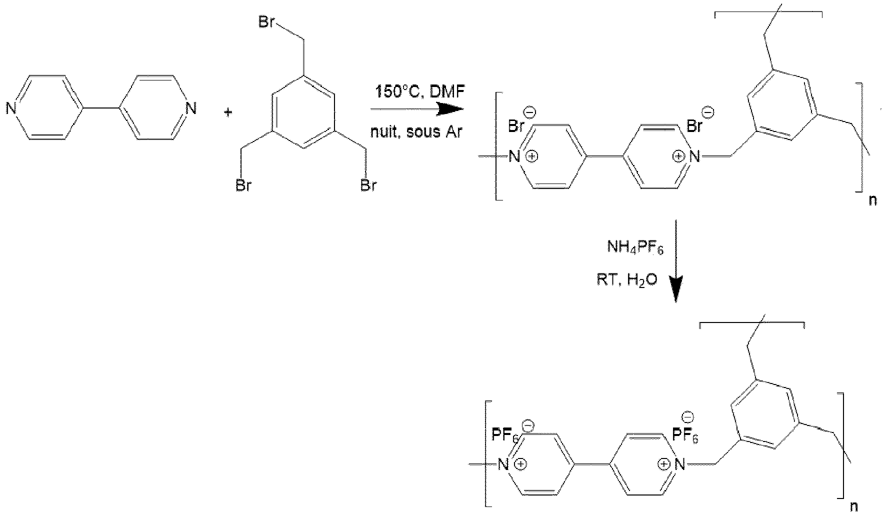

509 mg de 4,4'-bipyridine sont dissouts dans 10 ml de diméthylformamide anhydre auquel est ajouté 773 mg de 1,3,5-tris(bromométhylbenzène). La solution est mise au reflux pendant une nuit à 150°C pour former une suspension jaune. Le solide est filtré puis lavé avec 3 fois 50 ml d'acétate d'éthyle avant d'être séché à 80°C sous vide. Le rendement de cette réaction est de 85 % soit 1,09 g de polymère obtenu. Ce composé est insoluble dans tous les solvants testés (Acétone, Acétonitrile, Éther diéthylique, N,N-Diméthylformamide, Ethanol, Eau, Carbonate de propylène, Tétrahydrofurane).

Dans une seconde étape, 300 mg de ce produit est dispersé dans 20 ml d'eau distillée auxquels est ajoutée une solution de 2 g de NH₄PF₆ dans 8 ml d'eau au goutte à goutte. Après 1 h de mélange, le précipité obtenu est filtré et lavé à l'eau avant d'être séché à 80°C. 0,96 g de poudre violette est obtenu soit un rendement de 82 %.

### EXEMPLE 3

### Réalisation d'électrodes de polyviologène

Les différents polyviologènes (PV) synthétisés selon les exemples 1 et 2 sont testés de la manière suivante :
Chaque composé est dispersé dans de la *N*-méthylpyrrolidinone MP avec du carbone Super P (SP) et du polyfluorure de vinylidène (PVdF) en proportion 40 % / 40 % SP / 20 % PVdF (en poids) puis le mélange ainsi formé est enduit sur un feuillard d'aluminium.

Après séchage à 55°C pendant une nuit, des électrodes sont découpées, calandrées et enfin séchées sous vide pendant 48 h.

### EXEMPLE 4

### Illustration d'un procédé selon l'invention.

Les électrodes préparées en exemple 3 sont assemblées en boite à gants en mettant en œuvre à titre de contre-électrode, du lithium métallique et d'électrolyte, un mélange de carbonates (mélange EC/DMC) et de sels LiPF₆.

Les tests électrochimiques sont effectués en cyclage galvanostatique à un régime de C/10. Après une réduction complète du matériau jusqu'à 1,50 V vs Li⁺/Li, les bornes de potentiels ont été fixées à [1,50 V; 2,25 V] selon l'invention ou [3,00 V; 1,50 V] non conforme à l'invention.

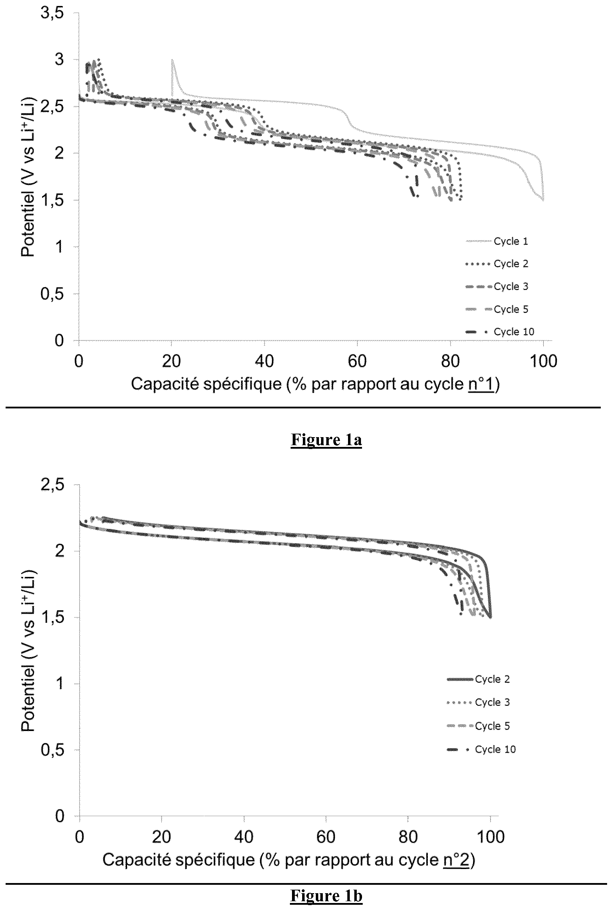

Comme illustré en figure 1 pour le produit préparé selon l'exemple 2, le cycle galvanostatique observé pour une plage de potentiel de 3,00 V à 1,50 V (figure la) rend compte comme attendu, d'une réaction redox à 2 électrons. En revanche, le cycle galvanostatique observé pour une plage de potentiel de 2,25 V à 1,50 V (figure 1b) rend compte d'une réaction redox à un seul électron.

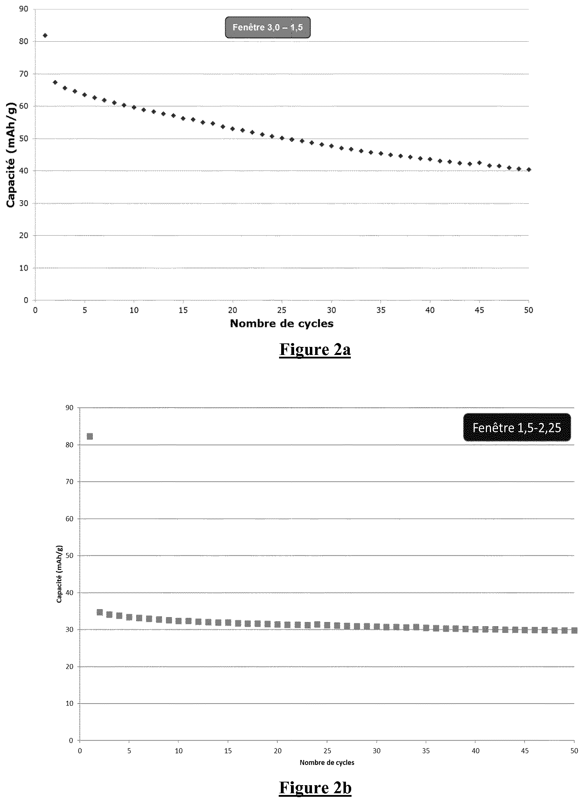

Les figures 2 illustrent l'évolution de la capacité spécifique de la batterie en fonction du nombre de cycles selon ces deux conditions d'utilisation.

Comme démontré par la figure 2b, seule l'utilisation de la batterie selon l'invention permet de stabiliser sa capacité spécifique.

La figure 2a montre bien que l'utilisation d'un domaine de potentiel borné de 3,00 à 1,50 V est ajustées pour une réaction redox à 2 électron ciblée et entraine une diminution des performances de cette batterie.

### EXEMPLE 5

### Illustration d'un procédé selon l'invention.

Le procédé de synthèse détaillé en exemple 1 a été reproduit en considérant, à titre de contre-ions, les ions BF₄⁻, TFSI⁻, ClO₄⁻ et NO₃⁻ en utilisant respectivement les sels NH₄BF₄, LiTFSI, LiClO₄, LiNO₃.

Les polyviologènes correspondants ont été utilisés pour élaborer des électrodes selon le procédé détaillé en exemple 3 et ces dernières testées en batterie dans les conditions détaillées en exemple 4.

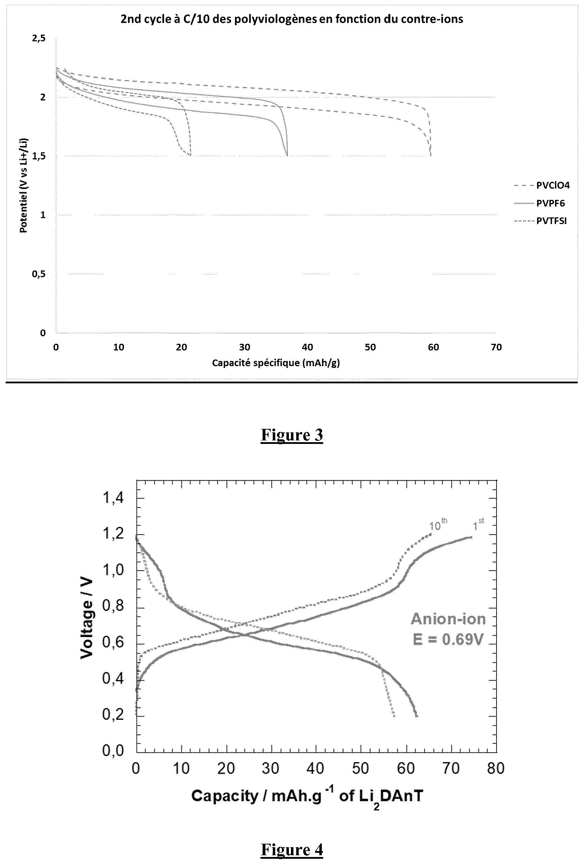

La figure 3 montre bien que l'ensemble des batteries testées dans les conditions requises selon l'invention manifestent les propriétés attendues.

### EXEMPLE 6

### Illustrations d'un procédé selon l'invention.

Après une réduction complète du matériau polyviologène réticulé décrit dans l'exemple 2 dans un premier dispositif utilisant une contre-électrode en lithium métallique jusqu'à 1,5 V vs Li⁺/Li puis une réoxydation jusqu'à 2,25 V vs Li+/Li, l'électrode de polyviologène est récupérée puis assemblée en boite à gants en mettant en œuvre à titre de contre-électrode le 2,5-dianilinotéréphtalate de dilithium et l'électrolyte, LiClO₄ (1M) dans le carbonate de propylène (PC)

Les tests électrochimiques sont effectués en cyclage galvanostatique à un régime de C/10. Les bornes de tensions ont été fixées à [0,2 V; 1,2 V].

Comme illustré en figure 4, les performances de cette batterie « rocking-chair » anionique, c'est-à-dire dans laquelle c'est l'anion qui fait la navette entre les 2 électrodes pour contrebalancer la charge lors des cycles de charge/décharge, sont effectivement confirmées.

## Revendications

1. Procédé d'utilisation d'une batterie disposant d'une électrode fonctionnant selon un mécanisme de complexation d'anions et au sein de laquelle le matériau actif d'électrode est un polyviologène **caractérisé en ce que** ledit polyviologène est un matériau insoluble dans l'électrolyte de ladite batterie et **en ce que** les conditions électrochimiques d'usage de ladite batterie sont ajustées pour que son processus de cycle de charge/décharge, soit établi sur la réaction redox à 1 électron entre la forme oxydée à 1 électron des motifs viologènes dudit polyviologène, dites radical cation, et leur forme totalement réduite, dites, forme neutre de polyviologène.

2. Procédé selon la revendication précédente, dans lequel lesdites conditions électrochimiques d'usage de ladite batterie sont ajustées pour que la forme oxydée à deux électrons des motifs viologènes du matériau polyviologène ne participe pas à un cycle charge/décharge.

3. Procédé selon la revendication 1 ou 2, dans lequel le processus de cycle charge/décharge est initié avec un polyviologène sous forme neutre ou sous forme radical cation.

4. Procédé selon la revendication précédente, dans lequel la forme neutre ou la forme radical cation de polyviologène est générée au préalable *in situ* à partir d'un polyviologène dont les motifs viologènes sont sous leur forme oxydée à deux électrons, par réduction partielle ou totale de ses motifs viologènes.

5. Procédé selon l'une quelconque des revendications précédentes, dans lequel le polyviologène est un polyviologène linéaire ou réticulé ou un de leurs mélanges.

6. Procédé selon l'une quelconque des revendications précédentes dans lequel le polyviologène oxydé possède à titre de contre-ion(s), un anion organique choisi parmi [N(SO₂CF₃)₂]⁻ (=TFSI⁻), [N(SO₂F)₂]⁻ (=FSI⁻), 4,5-dicyano-2-(trifluorométhyl)imidazole (=TDI), RCOO⁻, HCOO⁻, ou inorganique comme PF₆⁻, BF₄⁻, ClO₄⁻, F⁻, Cl⁻, Br⁻, I⁻, NO₃⁻ et HSO₄⁻.

7. Procédé selon l'une quelconque des revendications précédentes, dans lequel ladite batterie comprend un matériau polyviologène formé de monomères comprenant au moins un motif viologène neutre de formule générale (Ia) ou un motif viologène oxydé de formule générale (Ib) ou (Ic) 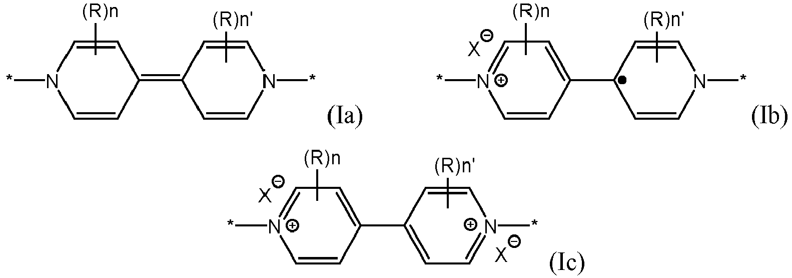 dans lesquelles :
- les groupes R, identiques ou différents, représentent un atome d'hydrogène, un alkyle linéaire en C₂ à C₅₀ le cas échéant substitué par au moins une fonction carboxylique, carboxylate, sulfonique, sulfonate, phosphonique ou phosphanate, amine, au moins un atome d'halogène, au moins un groupement hydroxy ou aldéhyde voire est interrompue par un motif cétonique.
- n et n' sont indépendamment l'un de l'autre égaux à 0 ou à un entier entre 1 et 50 ; et
- les radicaux X, identiques ou différents, et de préférence identiques, sont respectivement un anion organique choisi parmi [N(SO₂CF₃)₂]- (=TFSI⁻), [N(SO₂F)₂]-(=FSI⁻), 4,5-dicyano-2-(trifluorométhyl)imidazole (=TDI), RCOO⁻, HCOO⁻, ou inorganique comme PF₆⁻, BF₄⁻, ClO₄⁻, F⁻, Cl⁻, Br⁻, I⁻, NO₃⁻ et HSO₄⁻.

8. Procédé selon l'une quelconque des revendications précédentes, dans lequel ladite batterie comprend, à titre de matériau actif d'électrode, un matériau polyviologène de formule (II) 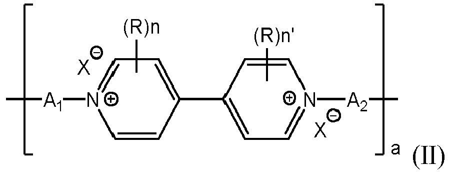 sous ses formes oxydées, en particulier radical cation ou réduite avec
- les motifs A₁ et A₂ identiques ou différents, indépendamment l'un de l'autre figurent une liaison covalente ou représentent une chaîne alkyle en C₁ à C₅₀ le cas échéant substituée par au moins une fonction carboxylique, carboxylate, sulfonique, sulfonate, phosphonique, phosphonate, amine, au moins un atome d'halogène, au moins un groupement hydroxy ou aldéhyde voire interrompue par un radical cétonique ou un motif de formule
-Ar(A₃)-
- Ar étant un motif arylène en C₆ à C₁₀ trivalent ou tétravalent, de préférence un phénylène C₆H₃ et A₃ une chaîne alkyle en C₁ à C₂₀ liée covalemment au motif Ar et à un dérivé motif viologène de formule (II) et
- R, n, n' et X sont tels que définis en revendication 7 et a est un entier variant de 1 à 10 millions.

9. Procédé selon l'une quelconque des revendications 1 à 8, dans lequel la batterie comprend, à titre de matériau actif d'électrode, un matériau polyviologène de formule générale (III) 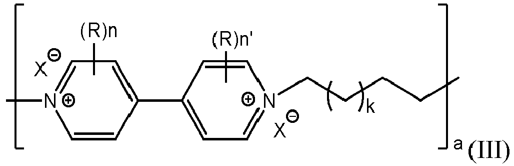 sous ses formes oxydées ou réduite avec les motifs R, n et n' et X⁻ étant tels que définis en revendication 7 et a est un entier variant de 1 à 10 millions et k étant un entier variant de 1 à 50.

10. Procédé selon l'une quelconque des revendications 1 à 8, dans lequel la batterie comprend, à titre de matériau actif d'électrode, un matériau polyviologène de formule générale (IV) 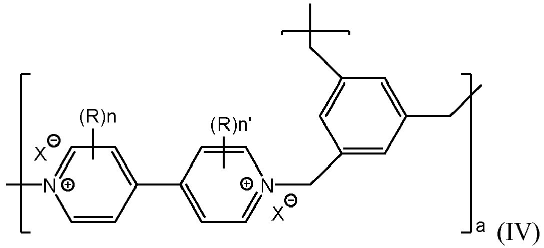 sous ses formes oxydées ou réduite avec les motifs R, n et n' et X⁻ étant tels que définis en revendication 7 et a est un entier variant de 1 à 10 millions.

11. Procédé selon l'une quelconque des revendications précédentes, dans lequel ladite batterie comprend à titre de contre-électrode, une électrode de lithium métallique et ses conditions électrochimiques d'usage pour son processus de cycle charge/décharge sont obtenues pour une tension comprise entre 1,5 V et 2,25 V vs Li⁺/Li.

12. Procédé selon l'une quelconque des revendications précédentes, dans lequel ladite batterie comprend à titre de contre-électrode, le 2,5-dianilinotéréphtalate de dilithium et ses conditions électrochimiques d'usage pour son processus de cyclage charge/décharge sont obtenues pour une tension comprise entre 0,2 V et 1,2 V.

13. Procédé selon l'une quelconque des revendications précédentes, dans lequel ladite batterie est une batterie lithium ou sodium, une batterie sodium-soufre ou une batterie dual-ion ou anion-ion.
